# EUROPEAN PATENT SPECIFICATION

(11) **EP 3 242 562 B1**
(45) Date of publication and mention of the grant of the patent: **18.11.2020**
(21) Application number: 15813442.9
(22) Date of filing: 18.12.2015
(51) Int. Cl.: A23G 1/00, A23D 7/015, A23D 9/02, A23G 1/52, A23G 1/36

(54) **PROCESS FOR PRODUCING AN AERATED FAT-BASED PRODUCT**
VERFAHREN ZUR HERSTELLUNG EINES LUFTDURCHSETZTEN FETTBASIERTEN PRODUKTS
PROCÉDÉ DE PRÉPARATION D'UN PRODUIT À BASE DE MATIÈRE GRASSE AÉRÉE

(30) Priority: 19.12.2014 EP 14199331; 19.12.2014 EP 14199333; 19.12.2014 EP 14199316; 19.12.2014 EP 14199321; 15.10.2015 EP 15189879; 15.10.2015 EP 15189885
(43) Date of publication of application: 15.11.2017
(73) Proprietor: Société des Produits Nestlé S.A., 1800 Vevey (CH)
(72) Inventor: PALZER, Stefan, 1000 Lausanne (CH); WINDHAB, Erich Josef, 8261 Hemishofen (CH); KOLLER, Cornelia, 9240 Uzwil (CH); GERMAN, Jamey, York Yorkshire YO23 1NX (GB)
(74) Representative: Lumsden, Stuart Edward Henry
(86) International application number: PCT/EP2015/080566
(87) International publication number: WO 2016/097330

(56) References cited:
- EP-A1- 1 673 978
- WO-A1-2014/037910
- FR-A1- 2 995 182
- JP-A- H03 201 946
- US-A- 3 095 305
- US-A- 4 272 558

## Description

The present invention relates to a novel method and apparatus to prepare aerated fat based products having unique bubble size and distribution and to the use of seeding with fat crystals to promote bubble nucleation in fat based masses comprising dissolved gas under pressure. Also, the invention relates to novel aerated fat based products characterized by a unique structure and texture, which are obtainable by the method of the present invention. Optionally aerated fat based products of and/or made according to the process and/or with apparatus of the present invention are micro-aerated and/or comprise bubbles with a small mean size and narrow distribution of bubble sizes.

Foaming of fat based edible products, especially confectionery systems, even more especially chocolate confectionery systems, is an old desire for which a number of equipment setups and methodologies have been developed and patented in the past decades.

Conventional methods to incorporate bubbles into a liquid or viscoelastic medium include (i) nucleation of gas bubbles in a liquid which is supersaturated; (ii) shaking or beating the liquid; (iii) generating a gas by fermentation or chemical reaction; (iv) blowing gas through a thin nozzle or single orifice; and (v) by sparging or blowing gas through a porous plate (G. M. Campbell, and E. Mougeot; Creation and characterization of aerated food products, Trends in Food Science & Technology 10 (1999) 283-296).

Novel methods use membranes, micro-engineered micro-channel devices, electrochemical reactions and ultrasound (cavitation) (R.N. Zuniga and J.M. Aguilera; Aerated food gels: fabrication and potential applications, Trends in Food Science & Technology 19 (2008) 176-187).

The major difficulty in generating stable foam structures within fat-based confectionary systems, such as systems where the continuous phase is fat based, like chocolate is that compared to foamed water based food products, there is a lack of suitable surfactants that can form stable interfacial skins with the ability to stabilize bubble interfaces. There are a small number of components that are active at the interfaces of fat systems, such as specific phospholipids and a few sugar esters (e.g. as described in the article S. Su-Jia, C. Dong, X. Shi-Chao, The Foaming Abilities of Surfactants in Cocoa Butter, Journal Of Food Process Engineering 36 (2013) 544-547, 2013 Wiley; and also in patent application WO2012-055744). However the addition of some of these components is generally limited by food law or to avoid off-taste.

As a consequence the most promising way to form and fix bubbles/air cells in a fat-based matrix fluid (especially those with a fat based continuous phase) is by rapid cooling and forming of a fat crystal network. Unfortunately, fat crystals do not preferably arrange at gas bubble interfaces and their generation kinetics is in general not fast enough to fix bubbles on a micro-scale before they coalesce and thus coarsen. In the past such restrictions (especially for certain gases, such as CO₂) allowed only the generation of aerated chocolate / fat-based confectionery systems with large bubbles (larger than about 100 microns). A typical example for such chocolate are those chocolate confectionery products available commercially from Nestle SA under the registered trademark Aero®. It would be useful to be able to micro-aerate chocolate with a wide range of gases and in particular with CO₂.

EP1673978(Kraft foods) describes a method for producing an aerated tempered confectionery mass by controlling the processing parameters such as pressure and temperature during aeration.

FR 2995182 (= WO 2014-037910) (Barry Callebaut) describes use of seeding to promote micro-aeration in a fat-based edible mass to improve the resistance of the product to blooming. The porosity of the products so obtained are low being a maximum of 4.5%, less than the aerated products of the present invention. This document provides a disincentive to a reader from aerating further. The problem addressed is to reduce bloom in conventional products and not to produce an aerated product as such. Increasing porosity above that taught to reduce bloom may be believed to change the sensory properties of the product leading to inconsistencies in taste between the conventional and bloom resistant versions.

US 4272558 (Bouette) describes (e.g. see col. 3, line 62 to col. 4, line 44) the use of seeding to promote bubble nucleation in a fat-based confectionery, however it is clear from the description that such seeds are angular sugar crystals and not fat based crystals such as cocoa butter crystals. The sugar crystal seed used in Bouette would not provide enhancements to extended fat crystal network in the final product. Bouette also does not appreciate the difficulties of incorporating fat-based crystals as seeds into a fat-based mass. The examples of Bouette use carbon dioxide at pressures of 10.5 kg cm⁻² (= 10.3 bar) and 6 kg cm⁻² (= 5.8 bar) and these pressures are much lower than used with carbon dioxide in preferred embodiments of the present invention.

Machines with two mixing heads that are designed to produce foam masses using pressure beating are known, such as the machines available commercially in 1998 under the trade designation 'Mondomix type Twin-A 12' from Mondomix. This two headed machine was stated as being useful to produce products such as chocolate coated marshmallows in which one mixing head aerates egg white which is combined with hot sugar by the second mixing head. Machines that consist of twin extruders have been produced under the trade designation 'ECO twin' and were available commercially from Bühler for stated uses such as production of pet food and feed for industrial fish farming. Neither of these machines have been suggested by their manufacturers as being suitable for the uses as described herein.

Micro-aeration is the addition of gas into a product in the form of bubbles that are too small to be observed by the naked eye. Bubble diameter for micro-aeration is normally less than 100 microns.

Achieving micro-aeration has been often investigated in the art, but a number of associated technical difficulties still remain unsolved.

Many of the processes of the prior art are quite complex and/or require the use of stabilizing agents of various nature to achieve a micro-aerated fat based, in particular confectionery, product. Anyway, addition of such components may be limited by food laws or by the fact that off-taste is to be avoided. Also, the consumer is generally not prone to accept new ingredients which are not traditionally included in the product recipes.

As a consequence, preparation of products incorporating high levels of gas and at the same time showing an even and homogeneous micro structure remains an unsolved challenge.

Additionally, chocolate aeration processes are traditionally carried out on masses already tempered and this procedure presents a number of disadvantages. First of all, it is quite energy inefficient due to the fact that the whole chocolate mass needs to be tempered before being aerated. Secondly, when working with tempered chocolate measures need to be taken during aeration process in order to avoid de-tempering of the chocolate mass. Lastly, when aerating chocolate masses, an increase in viscosity is normally observed which causes challenges for molding and enrobing processes downstream in the process; on such basis, the amount of gas which may be incorporated in the aerated chocolate mass is limited by the ability to process the chocolate mass after aeration.

There exists thus a need to solve one or more of the above mentioned problems. Specifically, it would be advantageous to achieve a method which allows preparation of a highly aerated fat based edible products (for example macro and/or micro aerated), in particular confectionery products, without the need of incorporating into the product recipe any additional ingredients.

Additionally, it would be advantageous to achieve a method which allows preparation of a macro and/or micro-aerated fat based edible products, particularly confectionery products, without the need of complex processing; in particular, it would be highly advantageous to provide a method which would not require tempering the chocolate mass before aerating it and optionally in which chocolate produced thereby would present fewer issues should it need to be removed from a mould.

It has been surprisingly found that seeding with fat-based crystals (for example fat crystals such as cocoa butter crystals) of a fat based edible mass which comprises dissolved gas under pressure promotes bubble nucleation in fat based edible mass thus achieving by later pressure release a macro and/or micro-aerated mass which may be easily further processed, in particular, for fat based confectionery masses, moulded and/or used for enrobing even at high levels of gas incorporation. It has also been found that cooling the fat based mass during the process is advantageous.

It would also be optionally advantageous to provide chocolate that when solid has a crystal network that is sufficiently robust to resist handling and/or further process steps even with a high degree of porosity. For example it would be useful to provide aerated chocolate that can be readily removed from a mould without damage. This is especially an issue when using carbon dioxide as this gas has been found to disrupt the crystal network within chocolate.

The object of the present invention is to solve some or all of the problems or disadvantages (such as identified herein) with the prior art.

Therefore in accordance with the broadest aspect of the present invention there is provided a method for the preparation of an aerated fat based edible product having a porosity of at least 10%, (conveniently a fat based confectionery product, more conveniently a chocolate and/or compound product), the method comprising the steps of:
a) incorporating gas under pressure from 4-80 bar into liquid fat-based mass (conveniently a fat based confectionery mass, more conveniently a chocolate and/or compound mass);
b)
   (I) injecting under pressure fat-based seed crystals into the fat-based mass (conveniently fat based confectionery mass, more conveniently a chocolate and/or compound mass) obtained from step a); and/or
   (II) optionally cooling the fat-based mass (conveniently fat based confectionery mass, more conveniently a chocolate and/or compound mass) to achieve a solid fat content of at least 10% by weight of the total fat mass;
c) releasing pressure from the fat-based mass (conveniently fat based confectionery mass, more conveniently a chocolate and/or compound mass) obtained from step b), in which the fat-based confectionery mass is an un-tempered liquid chocolate, and wherein the gas incorporated under pressure into a liquid fat-based mass is N₂,CO₂ and/or mixtures thereof.

The present application claims priority from the following applications also in the name of the present applicant, the contents of each of which are hereby incorporated herein by reference. EP14199331.1 filed 19th December 2014, EP14199321.2 filed 19th December 2014, EP14199316.2 filed 19th December 2014, EP14199333.7 filed 19th December 2104, EP15189879.8 filed 15th October 2015; and EP15189885.5 filed 15th October 2015.

An embodiment of the present invention provides a method as described above where at least one, preferably at least two more preferably three of the fat based mass(es) referred to in each of the three steps (a), (b) and (c) comprise, most preferably consist of a fat-based confectionery mass, for example a chocolate and/or compound mass.

Another aspect of the present disclosure (not part of the invention) provides a fat based edible product (conveniently a fat based confectionery product, more conveniently a chocolate and/or compound product) obtained and/or obtainable from (most conveniently directly from step c) of) a method of the present invention.

In all aspects of the present invention the term 'aerated' (e.g. when referring to 'aerated product') will be understood as referring to 'macro-aerated' and/or 'micro-aerated', for example as defined herein. Preferred embodiment(s) of all aspects of the present invention are micro-aerated in which case it will be understand that for these preferred embodiments all references herein to the term 'aerated' would be replaced by the term 'micro-aerated'.

Products obtained by the method of the invention are aerated to have a porosity of at least 10%. One preferred embodiment of the invention provides an aerated fat based edible product (conveniently a confectionery product) having a porosity of more preferably at least 30%.

Another useful embodiment of the disclosure (not part of the invention) provides a micro-aerated fat based edible product with a porosity of at least 10%. (conveniently a fat based confectionery product) having a volume weighted median bubble diameter (X_{50,3}) less than or equal to (≤) fifty (50) microns.

A further aspect of the present invention provides the use of seeding to promote bubble nucleation in a fat based edible mass to prepare an aferated fat-based edible product having a porosity of at least 10% and a solid fat content of at least 10% by weight of the total fat mass, where the mass comprises dissolved gas under pressure, preferably for the purpose of achieving aeration of the fat-based edible mass, and the fat-based edible mass is an un-tempered liquid chocolate and the seeding comprises injecting under pressure fat-based seed crystals into the fat-based edible mass.

A yet still further aspect of the present disclosure provides a batch-wise and/or continuous processing apparatus (not part of the invention) suitable to carry out the method of the invention; preferably the apparatus comprising a serial arrangement of six treatment regions (i) to (vi), whereby:
(i) high pressure is built up in the apparatus,
(ii) gas is dissolved in the fat based mass,
(iii) fat-based mass is cooled,
(iv) fat-based crystal seeds are added to the fat-based mass for crystal nucleation,
(v) foam bubble nucleation occurs,
(vi) pressure is released and the fat based mass foams and the aerated fat based mass is shaped and /or deposited.

Additional features and advantages of the present invention are described in, and will be apparent from, the description of the embodiments which are set out below with reference to the drawings in which:
Figure 1 and Figure 2 are photographs that show the appearance of a bar of milk chocolate obtained as described in Example 1 (front and back, respectively).
Figure 3 is a photograph showing the appearance of four milk chocolate bars cut through in cross-section, the bars obtained as described in Examples 2 to 5 (shown respectively left to right).
Figure 4 and Figure 5 represent full curves of cumulative bubble size distribution data (Q0 and Q3 respectively) for reference examples Comp A and Comp B and examples of the invention Examples 10 and 11 where the abscissa is the bubble diameter in mm.
Figure 6 and Figure 7 represent full curves of cumulative bubble size distribution data (Q0 and Q3 respectively) for Examples 12 and 13, where the abscissa is the bubble diameter in mm.
Figure 8 is a schematic representation of a processing apparatus according to an embodiment the invention. Figure 8 shows a compact processing unit with serial arrangement of processing sections (i) - (vi), specifically the non-limiting example of the apparatus being an extruder, where these sections in Figure 8 have the following labels: (i) is 'high pressure build up'; (ii) is 'gas solution'; (iii) is 'cooling'; (iv) is 'seeding (fat crystals)'; (v) is 'bubble nucleation' and (vi) is 'pressure release gas dissolution foaming'.
Figure 9 and Figure 10 represent full curves of cumulative bubble size distribution data (Q0 and Q3 respectively) for Examples 23, 24 and 25, where the abscissa is the bubble diameter in mm.

Without wishing to be bound by any theory it has been surprisingly found that incorporating fat crystals as seeds in a fat based mass that also comprises dissolved pressurised gas will promote nucleation of bubbles (and will achieve a porosity in the product of at least 10%, preferably higher). It is believed that this effect allows for the pressure in the aerated mass to be retained longer during the manufacturing process thus allowing easier use of the aerated mass in other subsequent process steps (such as moulding and/or enrobing) even at high levels of gas incorporation. The aerated products so obtained also have a pleasant mouth feel when eaten.

The seeds used in the present invention are fat based crystals, preferably fat crystals, more preferably crystals of cocoa butter.

In one embodiment, the fat based product according to the present invention is micro-aerated.

In an alternative embodiment, the fat based product of the present invention is macro-aerated.

In a further embodiment, the fat based product of the present invention is partially macro and partially micro aerated.

Certain terms as used herein are defined and explained below unless from the context their meaning clearly indicates otherwise.

The term 'fat based edible product' identifies edible products which are based on a fat continuous matrix. Non-limiting examples of such fat based edible products may be represented by fat based confectionery products as below defined, margarine, butter or spreads. In some embodiments, such fat continuous matrix may be represented by a substantially pure fat matrix.

The term 'fat based edible product composition or mass' identifies an un-tempered liquid chocolate (including its recipe and ingredients) which is used for the preparation of fat based edible products according to the method of the invention.

The term 'fat-based confectionery product' encompasses products that are based on chocolate and/or based on 'chocolate-like' components (such as 'compound'). The term 'chocolate-based' as used herein includes both products that are based on chocolate and/or based on 'chocolate-like' analogs, and thus for example may be based on dark, milk or white chocolate and/or compound.

The term 'chocolate' as used herein denotes any products that meet a legal definition of chocolate in any jurisdiction and also include products in which all or part of the cocoa butter are replaced by cocoa butter equivalents (CBE) and/or cocoa butter replacers (CBR). Chocolate coatings are also referred to herein as chocolate shells.

The terms 'chocolate compound' or 'compound' as used herein denote chocolate-like analogues characterized by presence of cocoa solids (which include cocoa liquor/mass, cocoa butter and cocoa powder) in any amount, notwithstanding that in some jurisdictions 'compound' may be legally defined by the presence of a minimum amount of cocoa solids.

The term 'chocolate confectionery' as used herein denotes a foodstuff which comprises chocolate and/or compound and optionally also other ingredients.

Preferred fat-based confectionery product(s) of the invention may comprise one or more: chocolate product, chocolate-like product (e.g. comprising cocoa butter replacers, cocoa-butter equivalents or cocoa-butter substitutes), chocolate coated product, chocolate-like coated product, chocolate coating for biscuits, wafers and/or other confectionery items, chocolate-like coatings for biscuits, wafers or other confectionery items, chocolate coating for ice-creams, chocolate-like coating for ice-creams, chocolate filling and/or chocolate-like filling.

The chocolate or chocolate-like fat-based confectionery product may be in form of a tablet, a bar, or a coating for confectionery products, wafer, biscuits or ice creams, among others. It may also comprise inclusions, chocolate layers, chocolate nuggets, chocolate pieces, chocolate drops. The fat-based confectionery product may further contain crispy inclusions e.g. cereals, like expanded or toasted rice or dried fruit pieces.

The term 'fat based confectionery product composition or mass' identifies an un-tempered liquid chocolate (including its recipe and ingredients) which is used for the preparation of fat base confectionery products of the invention. The fat based confectionery product composition may be used to mold a tablet or bar, to coat confectionery items or to prepare more complex chocolate or chocolate-like based products. Optionally, prior to its use in the preparation of a fat based confectionery product of the invention, inclusions according to the desired recipe may be added to the fat based confectionery product composition.

As it will be apparent to a person skilled in the art, in some instances the fat based confectionery product of the invention will have the same recipe and ingredients as the corresponding fat based confectionery product composition while in other instances, particularly where inclusions are added or for more complex confectionery products, the final recipe of the fat based confectionery product may differ from that of the fat based confectionary product composition used to prepare it.

In fat based confectionery chocolate-like products cocoa butter is replaced by fats from other sources. Such products, generally contain lauric fat (cocoa butter substitute, CBS, obtained from the kernel of the fruit of palm trees), or non-lauric vegetable fats (based on palm or other specialty fats), cocoa butter replacer (CBR) or cocoa butter equivalent (CBE). Unfortunately, also CBE, CBR and more so the CBS primarily contain saturated fats and very low levels of the healthy unsaturated omega three and omega six fatty acids.

The term 'micro-aerated' denotes an aerated product wherein bubbles that are too small to be observed by the naked eye. Typically, for micro-aerated products, the bubble diameter is less than or equal to 100 micron.

The term 'macro-aerated' identifies an aerated product wherein bubbles that are visible by naked eye. Typically, for micro-aerated products, bubble diameter is more than 100 micron.

In one embodiment of the invention, the aerated fat based confectionery product obtained by the method the invention is substantially free of water. In another embodiment, the micro-aerated fat based confectionery product of the invention is substantially free of any interfacially active aerating agent.

In the present invention the gas which is incorporated into the liquid fat-based mass (optionally liquid fat based confectionery mass) is N₂, CO₂ and/or mixtures thereof, more preferably is N₂ or CO₂. An embodiment of the invention provides micro-aerated fat-based masses having a high porosity (at least 30%, preferably from 32% to 48%) in which the gas is CO₂.

In step (a) of the method of the invention, the operative temperature may be from 10 to 50°C; in one embodiment is preferably from 20 to 50°C, more preferably from 20 to 45°C; or in another embodiment (optionally and conveniently where the aeration is micro-aeration) is usefully from 10 to 45°C, more usefully from 35 to 42°C.

In step (b) of the method of the invention, the operative temperature may be from 25 to 35°C, preferably from 28 to 35°C more preferably from 30 to 35°C (optionally and conveniently where the aeration is micro-aeration).

Usefully in step (b) of the method of the invention seed crystals are added in the form of a fat based seed crystal slurry containing fat crystals that melt in a temperature range that is adjusted to the processing temperature.

Conveniently in step (b) of the method of the invention seed crystals are added in the form of a well-tempered chocolate mass comprising cocoa butter crystals.

In step (c) of the method of the invention, the operative temperature may be from 20 to 36°C, preferably from 20 to 35°C, more preferably from 24 to 33°C.

In still other one embodiment, step c) in the process of the invention is performed under shear.

In one embodiment of the method of the invention, at the end of step b) the fat-based confectionery mass comprises a solid fat content of at least 15% by weight of the total fat mass, for example at least 20% by weight.

In one embodiment of the method of the invention, when the gas dissolved in the pressurised fat-based confectionery mass is nitrogen, at the end of step b) the fat-based confectionery mass comprises a solid fat content of at least 20% w/w of the total fat mass, for example at least 30% w/w.

In one embodiment of the method of the invention, when the gas dissolved in the pressurised fat-based confectionery mass is carbon dioxide, at the end of step b) the fat-based confectionery mass comprises a solid fat content of at least 10% w/w of the total fat mass, for example at least 15% of the total fat mass.

The gas dissolved is CO₂ and/or N₂. The the operative pressure for steps a) and/or b) is greater than or equal to 4 bar, more usefully greater than or equal to 5 bar, even more usefully greater than or equal to 6 bar, most usefully greater than or equal to 11 bar, and less than or equal to 80 bar, conveniently less than or equal 60 bar, more conveniently less than or equal 50 bar, more conveniently less than or equal 20 bar, most conveniently less than or equal 15 bar for example less than or equal to 10 bar.

The operative pressure for steps a) and/or b) may be from 5 to 80 bar and in another embodiment preferably from 4 to 10 bar.

In still other embodiment of the invention when the gas dissolved is N₂, the operative pressure for steps a) and/or b) may be from 20 to 80 bar, preferably from 50 to 70 bar.

When the gas dissolved is CO₂, the operative pressure for steps a) and/or b) may be from 11 to 50 bar, more preferably from 11 bar to 40 bar, even more preferably from 20 to 40 bar, most preferably from 25 to 40 bar.

In one embodiment when the dissolved gas is CO₂, the fat-based product may be macro-aerated. In another embodiment when the dissolved gas is CO₂ the fat based product may be micro-aerated, for example if prepared using an apparatus as described herein which comprises an extruder.

When the dissolved gas is N₂, in a preferred embodiment the fat-based product is optionally micro-aerated.

In the method of the present invention it is preferred that the operative pressure does not fluctuate.

Preferably the injected fat seed crystals used in step b) of the method of the present invention comprise, more preferably consist of, crystals of cocoa butter.

Usefully, in one embodiment, the injected fat seed crystals used in step b) comprise, more usefully consist of, cocoa butter crystal(s) of the polymorphic form(s) conventionally denoted beta-five and/or beta-six.

Conveniently in step b) seed crystals may be added in the form of a fat based seed crystal slurry containing fat crystals that melt in a temperature range that is adjusted to the processing temperature of the process.

Advantageously in step b) seed crystals may be added in the form of a well-tempered chocolate mass comprising cocoa butter crystals.

Usefully the fat seed crystals are injected in the liquid fat-based confectionery mass under pressure in an amount comprised between 0.05 and 2% by weight with respect to the total mass.

Preferably in step b) the fat seed crystals may be injected into the liquid fat-based confectionery mass under pressure and the amount of fat crystals by weight is from 0.05 to 2% by weight, the total weight of the confectionery mass being 100%.

Conveniently in step b) the fat seed crystals may be injected into the liquid fat-based confectionery mass under pressure as a suspension in which the crystals are dispersed (such as a slurry) and the amount of said suspension (e.g. slurry) injected is from 0.5 to 10% by weight, the total weight of the confectionery mass being 100%.

The fat seed crystals that are injected in the liquid fat-based confectionery mass under pressure in step b) may be in the form of a fat suspension comprising fat seed crystals, the crystals being present in the suspension in a fractional amount of from 10 to 30 parts, preferably from 10 to 20 parts by weight, the total weight of the fat suspension being 100 parts.

The seed fat crystals may be homogeneously mixed within the fat based mass by any suitable means for example with the aid of a static mixer and/or by injecting them into the final stage of a rotor-stator mixing head, the static mixer being preferred.

The present disclosure (not part of the invention) provides an aerated fat based confectionery product having a porosity of at least 5%, more preferably at least 6%, even more preferably at least 8%, most preferably at least 10%. In another embodiment, an aerated fat based confectionery product of the invention may have a porosity of at least 15%, usefully at least 20% more usefully at least 30%, for example at least 32%.

The present disclosure (not part of the invention) may provide an aerated fat based confectionery product having a porosity of up to 55%, preferably up to 50%. In an embodiment, optionally especially if aerated with carbon dioxide optionally under pressure, an aerated fat based confectionery product of the invention may have a porosity of up to 48%, for example up to 47%.

The present disclosure provides an aerated fat based confectionery product (not part of the invention) having a porosity from 10% to 50%. In another embodiment, an aerated fat based confectionery product of the invention may have a porosity more preferably from 10% to 40%. In a further embodiment, optionally especially if aerated with carbon dioxide under pressure, an aerated fat based confectionery product obtained by the method of the invention may have a porosity of from 30% to 50%, more preferably from 32% to 48%, most preferably from 33% to 47%.

In one embodiment, the present disclosure provides a micro-aerated fat based confectionery product (not part of the invention) having X_{50,3} (volume weighted median bubble diameter) equal or lower than 50 microns and a porosity of at least 30%.

In another embodiment, the present disclosure provides a micro-aerated fat based confectionery product (not part of the invention) having X_{50,3} (volume weighted median bubble diameter) equal or lower than 50 microns and a SPAN lower or equal to 2, for example lower or equal to 1.5.

In one embodiment, the present disclosure provides a micro-aerated fat based confectionery product (not part of the invention) having X_{50,3} (volume weighted median bubble diameter) equal or lower than 50 microns, a porosity of at least 30%, and a SPAN lower or equal to 2, for example lower or equal to 1.5.

A further aspect of the present invention provides the use of seeding to promote bubble nucleation in a fat-based edible mass to prepare an aerated fat-based edible product having a porosity of at least 10% and a solid fat content of at least 10% by weight of the total fat mass, where the mass comprises dissolved gas under pressure, preferably for the purpose of achieving aeration of the fat-based edible mass, and the fat-based edible mass is an un-tempered liquid chocolate and the seeding comprises injecting under pressure fat-based seed crystals into the fat-based edible mass.

In another aspect, the present disclosure provides an batch-wise or continuous processing apparatus (not part of the invention) to carry out the method of the invention which comprises: a) a mixing device where gas is incorporated under pressure into the fat based confectionery mass; b) a region (for example a point) of injection (injector) for seed crystals into the fat based confectionery mass under pressure; c) a region (for example a point) for pressure release to atmospheric pressure.

In one embodiment, the apparatus (not part of the invention) is an aeration device, for example an aeration device which uses a rotor-stator mixing type system, such as for example those aerating systems available commercially from Haas-Mondomix (referred to herein as Mondomix).

In a still further aspect, the present disclosure provides an batch-wise or continuous processing apparatus (not part of the invention) to carry out the method of the present invention as described herein comprising a serial arrangement of treatment regions (i) to (vii), whereby in regions: (i) high pressure is built up in the apparatus (also referred to as equipment herein), (ii) gas is dissolved in the fat based mass, (iii) fat-based mass is cooled, (iv) fat crystal seeds are added to the fat-based mass for crystal nucleation, (v) foam bubble nucleation occurs, (vi) pressure is released and the fat based mass foams and (vii) the aerated fat based mass is shaped or deposited.

Usefully regions (i) and/or (ii) may be located as whole or part of the mixer (a); regions (iii), (iv) and/or (ii) may be located as whole or part of the injector (b); and/or regions (vi) and/or (vii) may be located as whole or part of the pressure release (c).

In one aspect, the treatment regions (i) to (vii) are integrated into a compact processing unit, such as for example an extruder but not restricted to such.

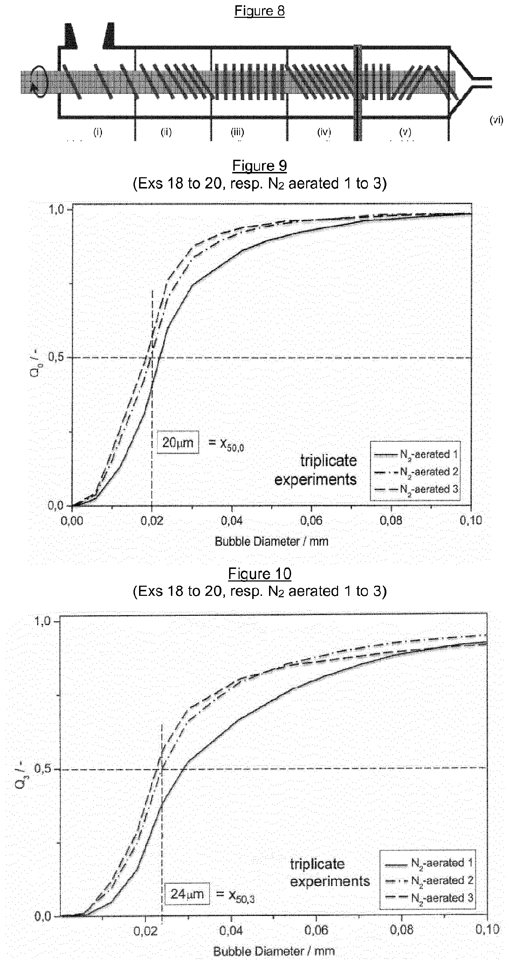

As illustrated in Figure 8, the processing apparatus (not part of the invention) comprises the serially arranged processing regions (i) to (vii). The fat based mass to be aerated (e.g. chocolate) is dosed as powder or pumped as paste into the inlet of section (i) and then serially treated passing all the subsequent regions (ii-iv). The transport through these sections is either supported by the feeding pump connected to the entrance of section (i) or by a conveying screw (where the apparatus is represented by an extruder). In the latter case the screw can also determine some level of superimposition among the action performed by the apparatus in the subsequent regions. Alternatively, separate dynamic elements are attached to each or some of the sections (i-vi) to apply specific shear-, mixing- and/or pressure build-up/release treatment. From processing section (vi) the aerated mass exits the aeration unit as a sufficiently liquid mouldable mass or as a shaped bar.

Unless the context clearly indicates otherwise, as used herein plural forms of the terms herein are to be construed as including the singular form and vice versa.

The term "comprising" as used herein will be understood to mean that the list following is non exhaustive and may or may not include any other additional suitable items, for example one or more further feature(s), component(s), ingredient(s) and/or substituent(s) as appropriate.

The terms 'effective', 'acceptable' 'active' and/or 'suitable' (for example with reference to any process, use, method, application, preparation, product, material, formulation, compound, monomer, oligomer, polymer precursor, and/or polymers described herein as appropriate) will be understood to refer to those features of the invention which if used in the correct manner provide the required properties to that which they are added and/or incorporated to be of utility as described herein. Such utility may be direct for example where a material has the required properties for the aforementioned uses and/or indirect for example where a material has use as a synthetic intermediate and/or diagnostic tool in preparing other materials of direct utility. As used herein these terms also denote that a functional group is compatible with producing effective, acceptable, active and/or suitable end products.

Preferred utility of the present invention comprises as a fat based edible composition, more preferably as a fat based confectionery composition, most preferably as a chocolate composition.

In the discussion of the invention herein, unless stated to the contrary, the disclosure of alternative values for the upper and lower limit of the permitted range of a parameter coupled with an indicated that one of said values is more preferred than the other, is to be construed as an implied statement that each intermediate value of said parameter, lying between the more preferred and less preferred of said alternatives is itself preferred to said less preferred value and also to each less preferred value and said intermediate value.

For all upper and/or lower boundaries of any parameters given herein, the boundary value is included in the value for each parameter. It will also be understood that all combinations of preferred and/or intermediate minimum and maximum boundary values of the parameters described herein in various embodiments of the invention may also be used to define alternative ranges for each parameter for various other embodiments and/or preferences of the invention whether or not the combination of such values has been specifically disclosed herein.

It will be understood that the total sum of any quantities expressed herein as percentages cannot (allowing for rounding errors) exceed 100%. For example the sum of all components of which the composition of the invention (or part(s) thereof) comprises may, when expressed as a weight (or other) percentage of the composition (or the same part(s) thereof), total 100% allowing for rounding errors. However where a list of components is non exhaustive the sum of the percentage for each of such components may be less than 100% to allow a certain percentage for additional amount(s) of any additional component(s) that may not be explicitly described herein.

The term "substantially" as used herein may refer to a quantity or entity to imply a large amount or proportion thereof. Where it is relevant in the context in which it is used "substantially" can be understood to mean quantitatively (in relation to whatever quantity or entity to which it refers in the context of the description) there comprises an proportion of at least 80%, preferably at least 85%, more preferably at least 90%, most preferably at least 95%, especially at least 98%, for example about 100% of the relevant whole. By analogy the term "substantially-free" may similarly denote that quantity or entity to which it refers comprises no more than 20%, preferably no more than 15%, more preferably no more than 10%, most preferably no more than 5%, especially no more than 2%, for example about 0% of the relevant whole.

Compositions used in the present invention may also exhibit improved properties with respect to known compositions that are used in a similar manner. Such improved properties may be (preferably as defined below) in at least one, preferably a plurality, more preferably three of more of those propert(ies) labeled 1 to 5 below. Preferred compositions used in the present invention, may exhibit comparable properties (compared to known compositions and/or components thereof) in two or more, preferably three or more, most preferably in the rest of those properties labeled 1 to 5 below.

Related properties of aerated confectionery composition (e.g. micro-aerated chocolate) compared to equivalent non-aerated compositions (i.e. with same recipe substantially free of (preferably free of) gas bubbles).
- 1: hardness (decrease),
- 2: stickiness (decrease),
- 3: aeration in mouth (increase),
- 4: melting time (decrease); and/or
- 5: powdery residues remaining (decrease)

The weight percentages in parameters above where relevant (e.g. for property 5) are calculated with respect to an initial weight of the composition.

Improved properties as used herein means the value of the component and/or the composition used in the present invention is > +8% of the value of the known reference component and/or composition described herein, more preferably > +10%, even more preferably > +12%, most preferably > +15%.

Comparable properties as used herein means the value of the component and/or composition of and/or used in the present invention is within +/-6% of the value of the known reference component and/or composition described herein, more preferably +/- 5%, most preferably +/- 4%.

The percentage differences for improved and comparable properties herein refer to fractional differences between the component and/or composition used in the invention and the known reference component and/or composition described herein where the property is measured in the same units in the same way (i.e. if the value to be compared is also measured as a percentage it does not denote an absolute difference).

The various test methods that may be used to measure various parameters described and given herein (for example in the Examples) are given below.

### Porosity

Porosity values were derived from computed tomography evaluation. Porosity describes the ratio of void fraction to the total volume of a sample. Hence porosity represents the ratio of the volume of gas V_{G} within a sample to the total sample volume Vₛ, hence V_{G}/Vₛ.

### Protocol and materials for Computed Tomography Analysis:

Foamed confectionary samples were stored below 5 °C until analysis. The samples were analyzed using a CT 35 (Scanco Medical, Brüttisellen, Switzerland) which was operated in a climate chamber set to 15 °C. The bubble detection resolution of the device was 6 micron. Cumulative bubble size distributions Q(x) (characterized by: X_{50,3} X₉₀,₃ X_{10,}3 and X_{50,0} X_{90,0} X_{10,0}), V_{g} and Vₛ,_were measured by computer tomography and extracted by image analysis.

From the bubble sizes X_{50,3} X₉₀,₃ X_{10,3} and X_{50,0} X_{90,0} X_{10,0}, the size distribution widths SPAN(Q3), SPAN(Q0) were also derived.

### Number weighted mean diameter of the bubble size (X_{50,0})

This parameter denotes the bubble diameter corresponding to which 50% of all bubbles in number sum up from the bubbles with the smallest bubble diameter to this mean diameter, i.e. 50% of all bubbles (number/counts of bubbles) in the sample are characterized by a diameter smaller or equal than the diameter denoted as X_{50,0}. Analogously, parameters X_{90,0} and X_{10,0} (for 90 % and 10 % of all bubbles respectively) were determined.

### Volume weighted mean diameter of the bubble size (X_{50,3})

This parameter denotes the bubble diameter corresponding to which 50% of the volume of all bubbles sums up from the bubbles with the smallest bubble diameter to this mean diameter, i.e. 50% of all bubble volume in the sample is provided by bubbles having a diameter smaller or equal than the diameter denoted as X_{50,3}. Analogously, parameters X₉₀,₃ and X_{10,3} (for 90 % and 10 % of all bubbles respectively) were determined.

### SPAN (Q3)

SPAN (Q3) was calculated for the volume weighted bubble size distribution by determining the ratio of (X_{90,3} - X_{10,3}) / X_{50,3} This is a measure to evaluate the width of the volume weighted bubble size distribution. A lower SPAN (Q3) value indicates a narrower bubble size distribution and with this a more homogenous and more stable foam structure.

### SPAN (Q0)

SPAN (Q0) was calculated for the number based bubble size distribution by determining the ratio of (X_{90,0} - X_{10,0}) / X_{50,0}. This is a measure to evaluate the width of the number weighted bubble size distribution. A lower SPAN (Q0) value indicates a narrower bubble size distribution and with this a more homogenous and more stable foam structure.

### Examples

The present invention will now be described in detail with reference to the following non limiting examples which are by way of illustration only.

### Example 1

### Preparation of a micro-aerated milk chocolate bar

### Materials:

A standard milk chocolate recipe was use in this experiment. Cocoa butter was used as carrier for seed crystals and cocoa butter seed crystals were sourced from Uelzena.

### Method:

Untempered milk chocolate was stored in a container at a temperature from 32 to 34 °C. Seed crystals (25%w/w) were mixed into cocoa butter (75%w/w) and placed into a container at a temperature of 32 to 34 °C.

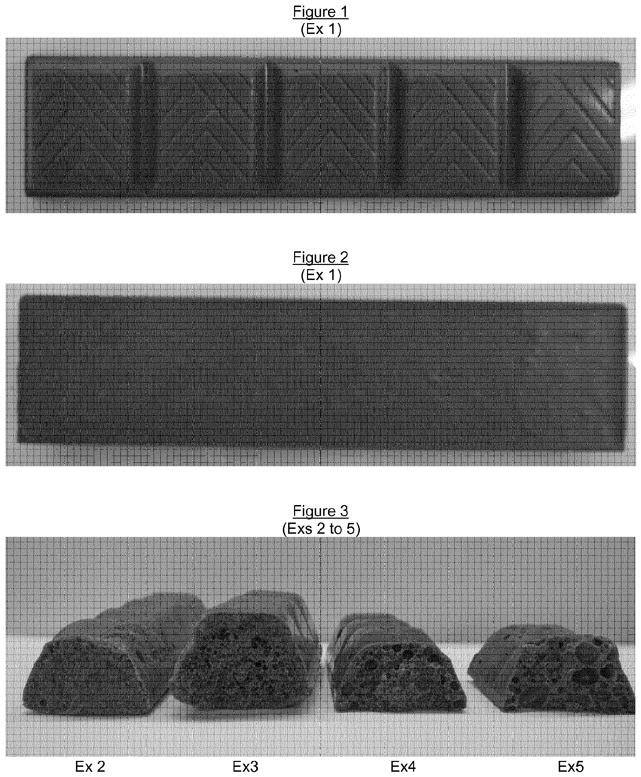

Conventional apparatus designed to aerate chocolate and available commercially from Haas-Mondomix (such apparatus also referred to herein as 'Mondomix') was used to incorporate gas (nitrogen) into the chocolate. A peristaltic pump was used to dose the required levels of seed crystals into the aerated chocolate mass. The seed slurry was pumped using the peristaltic pump into the final section of the Mondomix mixing head. The chocolate supply pump and seed crystal slurry dosing pump were calibrated such that 10g of seed suspension was dosed to every 990g of chocolate mass. This corresponds to 1% addition of seed suspension and 0.25% seed crystal addition to chocolate. All pipework to the Mondomix was set at 33 °C. The mixing head was connected to a water supply, set at 24 °C. The mixing head was set to a speed of 120 rpm with input pressure of 5.8 bar and actual mixing head pressure was 3 bar. The target aeration level was 15% and it was measured using plastic pots. After aerating and being seeded, the chocolate was deposited into moulds using a needle type valve, controlled by compressed air. The chocolate was allowed to flow into mould extremities before being placed in fridge to cool at 9°C. The samples were left in the fridge and de-moulded after approximately 45-60 minutes and quality assessed. All the micro-aerated bars de-moulded well and showed a good gloss. Appearance of one representative example of a bar so obtained (Example 1) is shown in Figures 1 and 2 (front and back, respectively).

### Examples 2 to 5

### Preparation of a macro-aerated milk chocolate bar

Four macro-aerated samples were prepared (Examples 2, 3, 4 and 5) using a method analogous to that described above for Example 1, but using a gas flow of CO₂ in place of N₂. The samples showed unique textures and differentiated bubble sizes and distributions. Different attributes were obtained by modulating the gas flow and mixing head speed. The appearance of the four bars so obtained (Examples 2 to 5) are shown in Figure 3, in section view (Examples 2 to 5 being from left to right respectively).

### Examples 6 to 9

Continuous production of mouldable micro-aerated milk and dark chocolate (Aeration with N₂ and seeding at 1.6 wt%)

Milk chocolate recipe: sugar 47.95%, cocoa butter 24.45%, whole milk powder 13.89%, cocoa kernels 10.01%, skim milk powder 3.47%, lecithin 0.25%, aromas 0.01%.

Dark Chocolate Recipe: sugar 48.38%, cocoa kernel 32.78%, cocoa butter 16.68%, dextrose 1.95%, lecithin 0.2%, vanilla aroma 0.01%.

Preparation Method: Micro-aerated milk chocolate was prepared and molded as follows. A Buehler twin screw extruder (available commercially from Buehler, Uzwil, Switzerland) was used wherein barrels had an inner diameter of 31 mm (for each screw) and a total width of 51 mm (twin screw cross section distance). Eleven barrel segments were used, each 420 mm long and individually temperature controlled. Through a funnel the material was fed in the middle of the first barrel. N₂ was dosed inside the equipment through a tempered stopper. Gas flow was 2.8g/h. In case of liquid feeding, the liquid raw material was pumped with a temperature controlled gear pump (35°C) from a tempered container (40°C) into the first barrel segment. In case of powdery feed material a loss in weight feeder (available commercially from K-Tron, Pitman NJ, USA) was used to dose the chocolate into the extruder.

In the first processing zone barrel temperature was from 10 to 33°C. Pressure in this section ranged between 1 and 63 bar.

In the following extruder section, barrel temperatures were from 35 to 42°C to ensure fast mixing of the gas inside the confectionary mass. Pressure in this section was kept constant at 63 bar.

In the subsequent extruder section, barrel temperature was from 35 to 24°C and pressure was constant at 63 bar.

Subsequently, 1.6wt% fat seed crystal slurry (approx. 11% total solid fat) with respect to total mass was injected at a temperature of 32.5°C and at pressure of 63bar and subsequently mixed with the mass with a static mixer element at a temperature of 28 to 30°C and at pressure between 63 and 1 bar . The micro-aerated chocolate was released through an adjustable needle valve at a temperature of 28 to 30°C.

The aerated chocolate mass was released to atmospheric pressure and ambient temperature and filled in molds of desired shapes which were then stored in a refrigerator at 5 to 10°C.

Processing pressure and product temperatures are reported in Table 1 below:

**Table 1**

| Sample | Pressure [bar] | Tₒᵤₜₗₑₜ [°C] |
|---|---|---|
| Example 6 | 63 | 28.5 |
| N₂-aerated, milk chocolate (liquid before feeding) | | |
| Example 7 | 63 | 29 |
| N₂-aerated, milk chocolate (powder before feeding) | | |
| Example 8 | 63 | 28.8 |
| N₂-aerated, dark chocolate (liquid before feeding) | | |
| Example 9 | 63 | 28.8 |
| N₂-aerated, dark chocolate (powder before feeding) | | |

Results: Aerated chocolate obtained according to the preparation methods above described were analyzed with computed tomography. Bubble size (expressed as X_{50,3} and X_{50,0}) and porosity obtained are reported in Table 2 below, where each test (trial) was repeated twice.

**Table 2**

| Sample | Porosity [%] | X_{50,3} [µm] | X_{50,0} [µm] | SPAN (Q3) | SPAN (Qo) |
|---|---|---|---|---|---|
| Example 6 | | | | | |
| trial 1 | 34.6 | 33 | 28 | 1 | 1.1 |
| trial 2 | 33.8 | 38 | 32 | 1 | 1.2 |

| Example 7 | | | | | |
|---|---|---|---|---|---|
| trial 1 | 36.3 | 47 | 40 | 1.1 | 1.1 |
| trial 2 | 36.0 | 46 | 39 | 1.2 | 1.3 |

| Example 8 | | | | | |
|---|---|---|---|---|---|
| trial 1 | 32.7 | 28 | 25 | 0.9 | 1 |
| trial 2 | 34.1 | 28 | 25 | 0.8 | 1 |

| Example 9 | | | | | |
|---|---|---|---|---|---|
| trial 1 | 35.1 | 45 | 37 | 1.2 | 1.4 |
| trial 2 | 34.6 | 42 | 34 | 1.1 | 1.3 |

Legend = Trial 1 & 2 indicates duplicate trials and associated results

Results obtained demonstrate that milk and dark chocolate samples obtained according to the process of the invention are present very high levels of gas incorporation (porosity around 40%) coupled with a micro-aerated structure (X_{50,3} and X_{50,0} lower than 50 microns).

### Examples Comp A, Comp B and Ex 10 and 11

Continuous production of mouldable micro-aerated milk chocolate (Aeration with N₂ and seeding at 8 wt%)

Milk Chocolate recipe: Sugar 47.95%, Cocoa butter 24.45%, whole milk powder 13.89%, cocoa kernels 10.01%, Skim milk powder 3.47%, Lecithin 0.25%, aromas 0.01%.

Preparation Method: Micro-aerated milk chocolate was prepared and molded as follows:
A Buehler twin screw extruder (Buehler, Uzwil, Switzerland) was used wherein barrels had an inner diameter of 31 mm and a total width of 51 mm. Eleven barrels were used, each 420 mm long and individually temperature controlled. Through a funnel the material was fed in the middle of the first barrel. N₂ was dosed inside the equipment through a tempered stopper. Gas flow was 4g/h N₂.

The liquid raw material was pumped with a temperature controlled gear pump (35°C) from a tempered container (40°C) into the first barrel segment.

In the first processing zone barrel temperature is from 13 to 33°C. Pressure in this section ranged between 1 and 63 bar.

In the following extruder section, barrel temperatures were from 35 to 42°C to ensure fast mixing of the gas inside the confectionary mass. Pressure in this section was constant at 63bar.

In the extruder subsequent section, barrel temperature was from 25.4 to 35°C and pressure constant at 63bar.

Subsequently, 8wt% fat seed crystal slurry (approx. 11% total solid fat) with respect to total mass was injected at a temperature of 32.5°C and at pressure of 63bar and subsequently mixed with the mass with a static mixer at a product temperature of from 28 to 30°C and at pressure between 63 and 1bar. The micro-aerated chocolate was released through an adjustable needle valve at a temperature of from 28 to 30°C.

The aerated chocolate mass was released to atmospheric pressure and ambient temperature and filled in molds of desired shapes which were then stored in a refrigerator at a temperature from 5 to 10°C.

Processing pressure and product temperatures are reported in Table 3 below, where examples Comp A and Comp B (without seeding) are reference examples for comparison with (seeded) Examples 10 and 11 of the present invention:

**Table 3**

| Sample | Seed Crystals [wt%] | Pressure [bar] | Tₒᵤₜₗₑₜ [°C] |
|---|---|---|---|
| Comp A | 0 | 65 | Last Barrel: 25.4 |
| | | | End plate: 26.7 |
| Comp B | 0 | 60 | Last Barrel: 25.4 |
| | | | End plate: 26.7 |
| Example 10 | 8 | 65 | Last Barrel: 25.4 |
| | | | End plate: 26.7 |
| Example 11 | 8 | 60 | Last Barrel: 25.4 |
| | | | End plate: 26.7 |

### Results:

Aerated milk chocolate obtained according to the preparation methods above described were analyzed with computed tomography (protocol for such measures should be indicated).

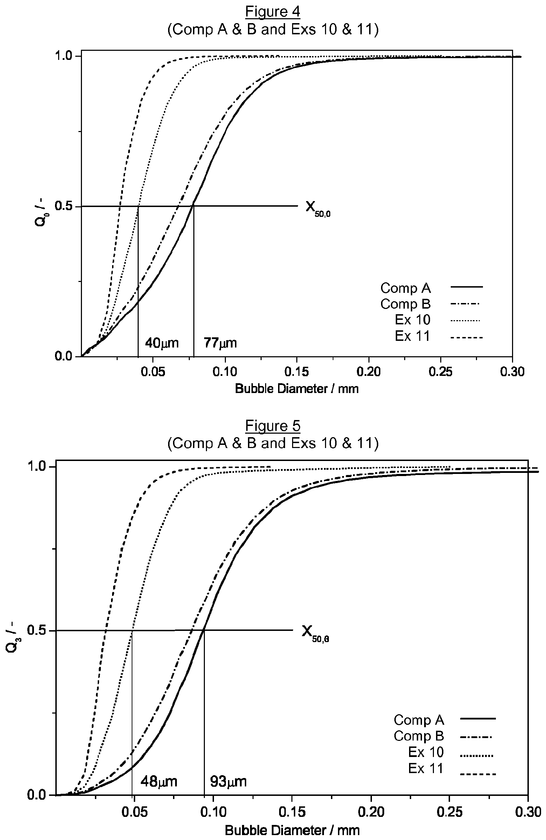

Bubble size (expressed as X_{50,3} and X_{50,0}) and porosity obtained are reported in Table 4 below and the full curves of cumulative bubble size distribution data (Q0 and Q3) are reported in Figures 4 and Figure 5 respectively.

**Table 4**

| Sample name | Porosity [%] | X_{50,3} [µm] | X_{50,0} [µm] | SPAN (Q₃) | SPAN (Q₀) |
|---|---|---|---|---|---|
| Comp A | 44.1 | 93 | 77 | 1 | 1.3 |
| Comp B | 40.4 | 86 | 68 | 1.1 | 1.4 |
| Example 10 | 46.3 | 48 | 40 | 1 | 1.1 |
| Example 11 | 38 | 32 | 27 | 1 | 1.1 |

The results obtained highlight the impact of adding seeds to the structure of micro-aerated milk chocolate prepared according to the process of the invention. The samples according to the invention present very high levels of aeration (porosity around 40%). Additionally, at comparable levels of porosity obtained for the different preparation, samples obtained by seeding the fat based mass (Example 10 and 11) show considerable differences in terms of X_{50,3} and X_{50,0} values which indicate that the products of the invention incorporate bubbles of finer dimensions (i.e. are micro-aerated). The bubbles of Comp A and Comp B are much larger with different visual and sensory properties and these products can be considered macro-aerated.

### Examples 12 to 13

Continuous production of mouldable micro-aerated milk chocolate (Aeration with CO₂ and Seeding at 1.6 wt%)

Milk Chocolate recipe: Sugar 47.95%, Cocoa butter 24.45%, whole milk powder 13.89%, cocoa kernels 10.01%, Skim milk powder 3.47%, Lecithin 0.25%, aromas 0.01%.

### Preparation Method:

Micro-aerated milk chocolate was prepared and molded as follows:
A Buehler twin screw extruder (available commercially from Buehler, Uzwil, Switzerland) was used wherein barrels had an inner diameter of 31 mm and a total width of 51 mm.

Eleven barrels were used, each 420 mm long and individually temperature controlled.

Through a funnel the material was fed in the middle of the first barrel. CO₂ was dosed inside the equipment through a tempered stopper. Gas flow was 7g/h CO₂.

The liquid raw material was pumped with a temperature controlled gear pump (35°C) from a tempered container (40°C) into the first barrel segment.

In the first processing zone barrel ranges temperature was from 10 to 33°C. Pressure in this section ranged between 1 and 35 bar.

In the following extruder section, barrel temperature was from 35 to 42°C to ensure fast mixing of the gas inside the confectionary mass. Pressure in this section was 35 bar.

In the subsequent extruder section barrel temperature was from 24 to 35°C and pressure constant at 3 5 bar.

Subsequently 1.6wt% fat seed crystal slurry (approx. 11% total solid fat) with respect to total mass was injected at a temperature of 32.5°C and at pressure of 35 bar and subsequently mixed with the mass with a static mixer at a temperature of from 28 to 30°C and at pressure between 1 and 35 bar. The micro-aerated chocolate was released through an adjustable needle valve at a temperature of from 28 to 30°C.

The aerated chocolate mass was released to atmospheric pressure and ambient temperature and filled in molds of desired shapes which were then stored in a refrigerator at a temperature of from 5 to 10°C.

Processing pressure and product temperatures are reported in Table 5 below:

**Table 5**

| Sample | Pressure [bar] | Tₒᵤₜₗₑₜ [°C] |
|---|---|---|
| Example 12 | 35 | 28.8 |
| CO₂-aerated, milk chocolate (liquid feed) | | |
| Example13 | 35 | 28.8 |
| CO₂-aerated, milk chocolate (liquid feed) | | |

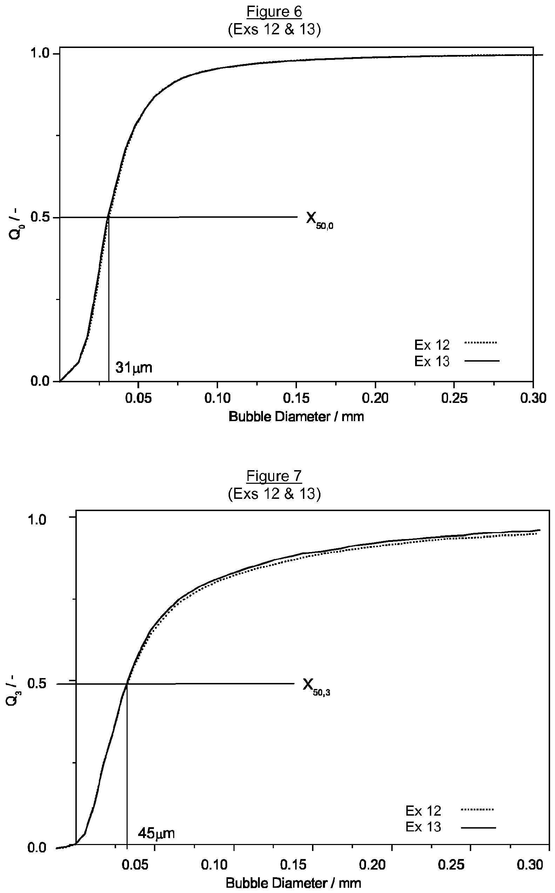

Results: Aerated chocolate obtained according to the preparation methods above described were analyzed with computed tomography. Bubbles size (expressed as X_{50,3} and X_{50,0}) and porosity obtained are reported in Table 6 below. Full curves of cumulative bubble size distribution data (Q0 and Q3) are reported in Figures 6 and Figure 7.

**Table 6**

| Sample | Porosity [%] | X_{50,3} [µm] | X_{50,0} [µm] | SPAN (Q₃) | SPAN (Q₀) |
|---|---|---|---|---|---|
| Example 12 | 46.4 | 45 | 31 | 3.3 | 1.7 |
| CO₂-aerated,milk chocolate (liquid feed) | | | | | |
| Example 13 | 45.9 | 45 | 31 | 3 | 1.7 |
| CO₂-aerated, milk chocolate (liquid feed) | | | | | |

Results obtained demonstrate that milk chocolate samples obtained according to the process of the invention under the conditions above described present very high levels of gas incorporation (porosity higher than 40%) coupled with a micro-aerated structure (X_{50,3} and X_{50,0} lower than 50 microns).

### Examples 14 to 17 and Comp C

### Sensory Evaluation of Samples according to the Invention

Micro-aerated milk chocolate samples according to the invention with different porosity (i.e. aeration) levels (respectively 12%, 30%, 35% and 38% corresponding to Examples 14, 15, 16 and 17) were tested by a trained panel along with corresponding non-aerated sample (Comp C) otherwise having the same milk chocolate recipe as the micro-aerated samples. In general, no negative impact was observed on the texture and taste parameters analysed for the aerated samples of the invention tested when compared to reference non-aerated sample (Comp C). The samples of the invention (Ex 14 to 17) were found to have a unique texture and were different from the reference sample (Comp C) especially in terms of the following texture attributes: hardness (decreased), stickiness (decreased), aeration in mouth (increased), melting time (decreased) and powdery residues (increased). It is believed that the unique texture and other attributes of the micro-aerated samples of the invention may also drive additional and/or alternative consumer preferences.

### Example 18 to 20

Continuous production of shape extruded micro-aerated dark chocolate

### (Aeration with N₂)

Dark Chocolate Recipe: sugar 48.38%, cocoa kernel 32.78%, cocoa butter 16.68%, (35.4% total fat), dextrose 1.95%, lecithin 0.2%, vanilla aroma 0.01%.

Preparation Method: Micro-aerated dark chocolate was prepared and moulded as follows. A Buehler twin screw extruder (available commercially from Buehler, Uzwil, Switzerland) was used wherein barrels had an inner diameter of 31 mm (for each screw) and a total width of 51 mm (twin screw cross section distance). Eleven barrel segments were used, each 420 mm long and individually temperature controlled. Through a funnel the material was fed in the middle of the first barrel segment. N₂ was dosed inside the equipment through a tempered stopper. Gas flow was 2.8g/h.

In case of liquid feeding, the liquid raw material was pumped with a temperature controlled gear pump (35°C) from a tempered container (40°C) into the first barrel segment. In case of powdery feed material a loss in weight feeder (available commercially K-Tron, Pitman NJ, USA) was used to dose the chocolate into the extruder.

In the first processing zone barrel temperature was from 11 to 35°C. Pressure in this section ranged between 1 and 65 bar.

In the following extruder section, barrel temperature was from 35 to 40°C to ensure fast mixing of the gas inside the confectionary mass. Pressure in this section was kept constant at 65 bar.

In the subsequent extruder section, barrel temperature was from 21 to 28°C and pressure was constant at 63 bar. The aerated chocolate mass was shape extruded to atmospheric pressure and ambient temperature and then stored in a refrigerator at a temperature of from 5 to 10°C.

Three representative samples (Examples 18, 19 and 20) were prepared as described above and tested as given below. Processing pressure and product temperatures are reported in Table 7 below:

**Table 7**

| Sample | Pressure [bar] | Tₒᵤₜₗₑₜ (last barrel) [°C] |
|---|---|---|
| Example 18 | 70 | 23.5 |
| N₂-aerated, dark chocolate | | |
| Example 19 | 65 | 23.5 |
| N₂-aerated,dark chocolate | | |
| Example 20 | 65 | 23.3 |
| N₂-aerated,dark chocolate | | |

Results: Aerated chocolate obtained according to the preparation methods above described were analysed with computed tomography. Bubbles size (expressed as X(_{50,3}) and X(_{50,0})) and porosity obtained are reported in Table 8 below.

**Table 8**

| Sample | Porosity [%] | X_{50,3} [µm] | X_{50,0} [µm] | SPAN (Q₃) | SPAN (Q₀) |
|---|---|---|---|---|---|
| Example 18 | 33.2 | 29 | 21 | 2.5 | 1.7 |
| N₂-aerated,dark chocolate | | | | | |
| Example 19 | 24.1 | 24 | 20 | 1.5 | 0.7 |
| N₂-aerated,dark chocolate | | | | | |
| Example 20 | 19.8 | 23 | 18 | 3.3 | 1.1 |
| N₂-aerated,dark chocolate | | | | | |

The results obtained demonstrate that dark chocolate samples obtained according to the process of the invention are present very high levels of gas incorporation (porosity around 20% and above) coupled with a micro-aerated structure (X_{50,3} and X_{50,0} less than 50 microns).

## Claims

1. Method for the preparation of aerated fat-based edible products having a porosity of at least 10%, the method comprising the steps of:
a) incorporating gas under pressure from 4 to 80 bar into a liquid fat-based mass;
b)
(I) injecting under pressure fat-based seed crystals into the fat-based mass obtained from step a);
(II) optionally cooling the fat-based mass to achieve a solid fat content of at least 10% by weight of the total fat mass; and
c) releasing pressure from the fat-based mass obtained from step b), in which the fat-based mass is an un-tempered liquid chocolate, and wherein the gas incorporated under pressure into a liquid fat-based mass is N₂, CO₂ and/or mixtures thereof.

2. Method as claimed in claim 1 for the preparation of micro-aerated fat based edible confectionery product having a porosity of at least 10%, the method comprising the step of:
b) (II) cooling the fat-based confectionery mass to achieve a solid fat content of at least 10% by weight of the total fat mass.

3. A method as claimed in any one of the preceding claims, in which the aeration is micro-aeration.

4. A method according to any one of the preceding claims, in which gas is dissolved into the liquid fat-based mass at pressure from 4 to 15 bar or from 50 to 80 bar.

5. A method according to any one of the preceding claims, in which step a) is performed at temperature from 10 to 50°C, preferably from 20 to 50°C, preferably from 20 to 45°C and preferably from 25 to 35°C.

6. A method according to any one of the preceding claims, in which the fat-based crystals comprise crystals of cocoa butter.

7. A method according to any one of the preceding claims, in which in step (b)(I) seed crystals are added in the form of a cocoa butter seed crystal slurry at a temperature from 28 to 35°C.

8. Use of seeding to promote bubble nucleation in a fat-based edible mass to prepare an aerated fat-based edible product having a porosity of at least 10% and a solid fat content of at least 10% by weight of the total fat mass, where the mass comprises dissolved gas under pressure, preferably for the purpose of achieving aeration of the fat-based edible mass, and the fat-based edible mass is an un-tempered liquid chocolate and the seeding comprises injecting under pressure fat-based seed crystals into the fat-based edible mass.

9. The use as claimed in claim 8, where the product has a porosity of from 32% to 48% and optionally was obtained by aeration with carbon dioxide.

10. The use as claimed in any of claims 8 to 9, the product having X_{50,3} (volume weighted median bubble diameter) equal or lower than 50 microns and a porosity of at least 30%, preferably which has a SPAN less than or equal to 2 or less than or equal to 1.5.

11. The use as claimed in any of claims 8 to 10, in which the fat-based crystals comprise crystals of cocoa butter.

12. The use as claimed in any of claims 8 to 11, in which the seed crystals are added in the form of a cocoa butter seed crystal slurry at a temperature from 28 to 35°C.

## Patentansprüche

1. Verfahren zur Herstellung von luftdurchsetzten fettbasierten essbaren Produkten mit einer Porosität von mindestens 10 %, das Verfahren umfassend die Schritte:
a) Einarbeiten von unter Druck stehendem Gas von 4 bis 80 bar in eine flüssige fettbasierte essbare Masse;
b)
(I) Einspritzen von fettbasierten Keimkristallen unter Druck in die aus Schritt a) erhaltene fettbasierte Masse;
(II) wahlweise Kühlen der fettbasierten Masse, um einen Feststofffettgehalt von mindestens 10 Gew.-% der Gesamtfettmasse zu erreichen; und
c) Freisetzen des Drucks von der aus Schritt b) erhaltenen fettbasierten Masse, in der die fettbasierte Masse eine nicht temperierte flüssige Schokolade ist und wobei das unter Druck stehende, in eine flüssige fettbasierte Masse eingearbeitete Gas N₂, CO₂ und/oder Mischungen davon ist.

2. Verfahren nach Anspruch 1 zur Herstellung eines mikro-luftdurchsetzten fettbasierten essbaren Süßwarenprodukts mit einer Porosität von mindestens 10 %, das Verfahren umfassend die Schritte:
b) (II) Kühlen der fettbasierten Masse, um einen Feststofffettgehalt von mindestens 10 Gew.-% der Gesamtfettmasse zu erreichen.

3. Verfahren nach einem der vorstehenden Ansprüche, bei dem die Durchlüftung eine Mikrodurchlüftung ist.

4. Verfahren nach einem der vorstehenden Ansprüche, bei dem Gas in der flüssigen fettbasierten Masse bei einem Druck von 4 bis 15 bar oder von 50 bis 80 bar gelöst wird.

5. Verfahren nach einem der vorstehenden Ansprüche, bei dem Schritt a) bei einer Temperatur von 10 bis 50 °C, vorzugsweise von 20 bis 50 °C, vorzugsweise von 20 bis 45 °C und vorzugsweise von 25 bis 35 °C durchgeführt wird.

6. Verfahren nach einem der vorstehenden Ansprüche, bei dem die fettbasierten Kristalle Kristalle von Kakaobutter umfassen.

7. Verfahren nach einem der vorstehenden Ansprüche, bei dem in Schritt (b)(I) Keimkristalle in Form von einer Kakaobutterkeimkristallaufschlämmung bei einer Temperatur von 28 bis 35 °C hinzugefügt werden.

8. Verwendung der Aussaat, um Blasenkeimbildung in einer fettbasierten essbaren Masse zu fördern, um ein luftdurchsetztes fettbasiertes essbares Produkt mit einer Porosität von mindestens 10 % und einem Feststofffettgehalt von mindestens 10 Gew.-% der Gesamtfettmasse herzustellen, wobei die Masse ein unter Druck stehendes gelöstes Gas umfasst, vorzugsweise zum Zwecke des Erreichens einer Durchlüftung der fettbasierten essbaren Masse, und die fettbasierte essbare Masse eine nicht temperierte flüssige Schokolade ist und die Aussaat das Einspritzen unter Druck fettbasierter Keimkristalle in die fettbasierte essbare Masse umfasst.

9. Verwendung nach Anspruch 8, wobei das Produkt eine Porosität von 32 % bis 48 % aufweist und wahlweise mittels Durchlüftung mit Kohlendioxid erhalten wurde.

10. Verwendung nach einem der Ansprüche 8 bis 9, wobei das Produkt X_{50,3} (volumengewichteter mittlerer Blasendurchmesser) gleich oder geringer als 50 Mikrometer und eine Porosität von mindestens 30 % aufweist, das vorzugsweise eine SPAN von weniger als oder gleich 2 oder weniger oder gleich 1,5 aufweist.

11. Verwendung nach einem der Ansprüche 8 bis 10, bei der die fettbasierten Kristalle Kristalle von Kakaobutter umfassen.

12. Verwendung nach einem der Ansprüche 8 bis 11, wobei die Keimkristalle in Form einer Kakaobutterkeimkristallaufschlämmung bei einer Temperatur von 28 bis 35 °C hinzugefügt werden.

## Revendications

1. Procédé pour la préparation de produits comestibles aérés à base de matière grasse ayant une porosité d'au moins 10 %, le procédé comprenant les étapes consistant à :
a) incorporer un gaz sous une pression allant de 4 à 80 bar dans une masse liquide à base de matière grasse ;
b)
(I) injecter sous pression des cristaux d'ensemencement à base de matière grasse dans la masse à base de matière grasse obtenue par l'étape a) ;
(II) éventuellement refroidir la masse à base de matière grasse pour obtenir une teneur en matière grasse solide d'au moins 10 % en poids de la masse de matière grasse totale ; et
c) relâcher la pression de la masse à base de matière grasse obtenue par l'étape b), dans lequel la masse à base de matière grasse est un chocolat liquide non soumis à un tempérage, et dans lequel le gaz incorporé sous pression dans une masse liquide à base de matière grasse est N₂, CO₂ et/ou des mélanges de ceux-ci.

2. Procédé selon la revendication 1 pour la préparation d'un produit de confiserie comestible micro-aéré à base de matière grasse ayant une porosité d'au moins 10 %, le procédé comprenant l'étape consistant à :
b) (II) refroidir la masse de confiserie à base de matière grasse pour obtenir une teneur en matière grasse solide d'au moins 10 % en poids de la masse de matière grasse totale.

3. Procédé tel que revendiqué dans l'une quelconque des revendications précédentes, dans lequel l'aération est une micro-aération.

4. Procédé selon l'une quelconque des revendications précédentes, dans lequel du gaz est dissous dans la masse liquide à base de matière grasse à une pression allant de 4 à 15 bar ou de 50 à 80 bar.

5. Procédé selon l'une quelconque des revendications précédentes, dans lequel l'étape a) est mise en œuvre à une température allant de 10 à 50 °C, de préférence de 20 à 50 °C, de préférence de 20 à 45 °C et de préférence de 25 à 35 °C.

6. Procédé selon l'une quelconque des revendications précédentes, dans lequel les cristaux à base de matière grasse comprennent des cristaux de beurre de cacao.

7. Procédé selon l'une quelconque des revendications précédentes, dans lequel à l'étape (b)(I) des cristaux d'ensemencement sont ajoutés sous la forme d'une bouillie de cristaux d'ensemencement de beurre de cacao à une température allant de 28 à 35 °C.

8. Utilisation d'un ensemencement pour promouvoir la nucléation de bulles dans une masse comestible à base de matière grasse pour préparer un produit comestible aéré à base de matière grasse ayant une porosité d'au moins 10 % et une teneur en matière grasse solide d'au moins 10 % en poids de la masse de matière grasse totale, où la masse comprend du gaz dissous sous pression, de préférence dans le but d'obtenir une aération de la masse comestible à base de matière grasse, et la masse comestible à base de matière grasse est un chocolat liquide non soumis à un tempérage et l'ensemencement comprend l'injection sous pression de germes cristallins à base de matière grasse dans la masse comestible à base de matière grasse.

9. Utilisation selon la revendication 8, où le produit a une porosité allant de 32 % à 48 % et éventuellement a été obtenu par aération avec du dioxyde de carbone.

10. Utilisation selon l'une quelconque des revendications 8 à 9, le produit ayant un X_{50,3} (diamètre de bulle médian pondéré en fonction du volume) égal ou inférieur à 50 micromètres et une porosité d'au moins 30 %, de préférence qui a un SPAN inférieur ou égal à 2 ou inférieur ou égal à 1,5.

11. Utilisation selon l'une quelconque des revendications 8 à 10, dans laquelle les cristaux à base de matière grasse comprennent des cristaux de beurre de cacao.

12. Utilisation selon l'une quelconque des revendications 8 à 11, dans laquelle les cristaux d'ensemencement sont ajoutés sous la forme d'une bouillie de cristaux d'ensemencement de beurre de cacao à une température allant de 28 à 35 °C.
